# EUROPEAN PATENT SPECIFICATION

(11) **EP 0 993 416 B1**
(45) Date of publication and mention of the grant of the patent: **05.03.2003**
(21) Application number: 98933096.4
(22) Date of filing: 01.07.1998
(51) Int. Cl.: B66F 17/00

(54) **CAPACITY DATA MONITOR**
MONITOR FÜR LEISTUNGSDATEN
MONITEUR POUR DONNEES DE CAPACITE

(30) Priority: 09.07.1997 US 53077 P
(43) Date of publication of application: 19.04.2000
(73) Proprietor: CROWN EQUIPMENT CORPORATION, New Bremen, Ohio 45869 (US)
(72) Inventor: WELLMAN, Timothy, A., Coldwater, OH 45828 (US); MAGOTO, Daniel, C., Russia, OH 45363 (US)
(74) Representative: Cummings, Sean Patrick
(86) International application number: PCT/US98/13787
(87) International publication number: WO 99/002445

(56) References cited:
- EP-A- 0 343 839
- DE-U- 9 204 332
- FR-A- 2 499 053
- FR-A- 2 499 961
- GB-A- 1 258 081
- US-A- 2 935 161

## Description

This invention relates to an improved method and apparatus for providing information to a fork lift truck operator regarding the vertical position of forks of the truck, the height to which the forks can be raised for a given load and the speed of the truck by means of a display and an audible alarm.

Fork lift trucks, such as rider reach lift trucks, are often provided with a placard or plate on which capacity information is placed, e.g., information as to how high the forks may be raised with various loads on the forks. A capacity plate may include a table which states load weight versus recommended fork height indicating for a given truck that a load of 2500 pounds (1134 kg) may be lifted to a recommended maximum height of 321 inches (815 cm), a load of 3000 pounds (1361 kg) may be lifted to a recommended maximum height of 300 inches (762 cm), a load of 4000 pounds (1814 kg) may be lifted to a recommended maximum height of 270 inches (685 cm), and so forth. It is apparent that such information can be used by the operator to determine heights to which a given load can be lifted and/or load size which can be lifted to a given height. The center of the load is also an important consideration. For example, if a load is moved from 24 inches (61 cm) forward of the mast to 34 inches (86 cm) forward of the mast, the load capacity may be reduced from 3000 pounds (1361 kg) to 2100 pounds (952 kg).

US-A-2,935,161 discloses an automatic safety system for limiting the speed of the engine of a forklift truck when a load on forks of the truck is elevated to a height that would be dangerous at a high rate of speed. The engine is prevented from operating altogether if an attempt is made to operate the vehicle in high gear when the load is elevated above a predetermined height. However, the system does not limit engine speed even when the forks are above the predetermined height if the power train is not transmitting power so that the load can be lifted and lowered under full power.

FR-A-2,499,053 discloses three embodiments of load condition indicating apparatus. Each of these embodiments displays an overturn danger border which forms a line or plane in two dimensions, or a surface in three dimensions. For the two dimensional representations, the weight and centroid are displayed relative to the overturn danger border as two lines intersecting at a point and as a hatched area or plane. For the three dimensional representation, the weight, centroid and lift height are displayed relative to the overturn danger border as a rectangular solid.

There is a need for a more convenient, attention getting, way of providing an operator with the information necessary to operate a fork lift truck to assist the operator in estimating or determining the weight of the load, the height of the forks and the speed of the truck.

### SUMMARY OF THE INVENTION

In the present invention, the speed of the truck, the weight of the load on the forks and the height of the forks are monitored and compared with capacity data regarding the truck. A visual display panel is provided to make clear to an operator of the truck the maximum recommended fork height for an existing load. The invention also provides a visual indication whenever the forks are raised above a staging or collapsed height, i.e., the top of a lowermost mast member, and alerts the operator using flashing lights and audible alarms when certain other conditions are present.

A display panel includes, among other things, a representation of a lift truck, a set of four indicators above the truck representing the load on the forks and hence a maximum recommended fork height for that load; a second set of five indicators in the form of forks representing the height of the forks, one of which represents the forks below the staging or collapsed height; and, a visual indicator representing an operator correctable error. The truck is also provided with a chime or other audible alarm device and a text display screen for providing the operator with written instructions, when necessary.

It is therefore an object of the present invention to provide a method and apparatus for displaying information to the operator of a lift truck relating to the actual height of the forks and a maximum recommended height to which the forks should be raised with an existing load.

It is another object of the present invention to provide a method and apparatus for providing a visual indication whenever the forks are raised above the collapsed height; and further, to provide an alarm whenever the forks are raised above the collapsed height and the speed of the truck is above a predetermined speed. Preferably, the alarm provides both a visual and an audible alarm whenever the forks are raised above the collapsed height and the speed of the truck is above a predetermined speed.

Other objects and advantages of the invention will be apparent from the following description, the accompanying drawings and the appended claims.

### BRIEF DESCRIPTION OF THE DRAWINGS

Fig. 1 illustrates an enhanced display panel for a lift truck incorporating a first embodiment of the present invention and showing various indicators for use by the operator, including a battery level indicator, several height zone indicators, several fork location indicators including a free lift zone indicator, an operator correctable error indicator, and a text display screen;
Fig. 2 is a side view of a typical rider reach lift truck;
Fig. 3 is a perspective view of a portion of a carriage assembly showing a tilt cylinder, a weight sensor and a tilt switch;
Fig. 3A illustrates a preferred embodiment of the tilt switch of Fig. 3;
Fig. 4 is a hydraulic schematic diagram showing the weight sensor connected to the tilt cylinder;
Fig. 5 is an electrical block diagram of the present invention;
Fig. 6 illustrates a portion of a display panel for a lift truck incorporating a second, simplified embodiment of the present invention for use on a truck without a weight sensor and showing a representation of a lift truck and a fork symbol which can be illuminated;
Fig. 7 illustrates the display panel of Fig. 6 showing the fork symbol illuminated when the forks are above a collapsed height and the truck's speed is below a predetermined value;
Fig. 8 illustrates the display panel of Fig. 6 showing the fork symbol flashing and an audible alarm sounding when the forks are above the collapsed height and the vehicle's speed is above a predetermined value;
Fig. 9 illustrates a portion of the enhanced display panel of Fig. 1 which is shown as it appears upon initial startup, i.e., all indicators are illuminated, the text display screen indicates TEST mode, and the audible alarm is sounding;
Fig. 10 illustrates the enhanced display of Fig. 9 when the forks are below the collapsed height and the load on the forks does not recommend a limitation on the height of the forks;
Fig. 11 is similar to Fig. 10 but shows the forks below the collapsed height with the load on the forks corresponding to a recommended limitation of the height of the forks to a height zone H3;
Fig. 12 is a similar to Figs. 10 and 11 but shows the forks below the collapsed height with the load on the forks resulting in a reduced recommended height limitation to a height zone H1;
Fig. 13 illustrates the enhanced display of Fig. 9 when the forks are above the collapsed height, the load on the forks does not recommend a fork height limitation and the travel speed of the truck is below a predetermined value;
Fig. 14 is a view similar to Fig. 13, but with the vehicle's speed above the predetermined value so that the fork height indicator is flashing and the audible alarm is sounding;
Fig. 15 illustrates the enhanced display of Fig. 9 when the forks are above the collapsed height, but below the maximum recommended height for the load on the forks, and the travel speed is below a predetermined value;
Fig. 16 is a view similar to Fig. 15, but with the travel speed above the predetermined value so that the fork height indicator is flashing and the audible alarm is sounding;
Fig. 17 illustrates the enhanced display of Fig. 9 when the forks are below the collapsed height, but the overall load capacity of the truck has been exceeded so that the operator correctable error indicator is lighted and CHECK LOAD is displayed on the text display;
Fig. 18 illustrates the enhanced display of Fig. 9 when the forks are above both the collapsed height and the recommended weight height level, i.e., the fork height recommended in view of the weight of the load on the forks, and truck travel speed below the predetermined value so that the operator correctable error indicator is lighted and CHECK LOAD is displayed on the text display;
Fig. 19 is a view similar to Fig. 18 but with the travel speed above the predetermined value so that the fork height indicator is flashing, CHECK LOAD is displayed on the text display and, the audible alert is sounding;
Fig. 20 shows the enhanced display of Fig. 9 when the forks have been tilted to either the full up or full down position which disables the display and is indicated with MONITOR DISABLED being displayed on the text display; and
Fig. 21 is a flow chart showing the operation of a microprocessor which controls the alerting system of the present invention.

### DETAILED DESCRIPTION OF THE INVENTION

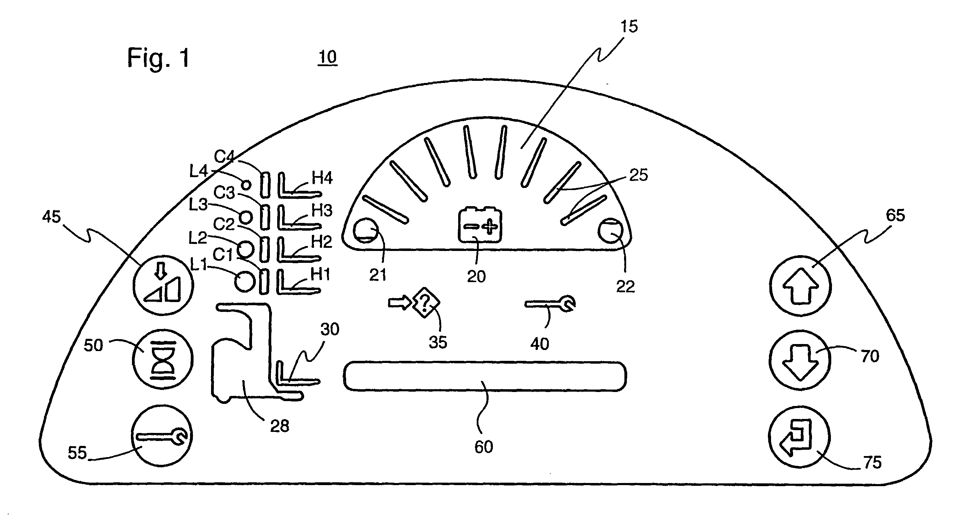

Reference is now made to the drawings and particularly to Fig. 1, which is a view of a display panel 10 on an electric powered lift truck showing various indicators for use by an operator of the truck. Included on the display panel 10 is a battery voltage level indicator 15 (a type of fuel gauge) that is provided with a symbol 20 that represents a battery, a symbol 21 that represents a discharged battery and a symbol 22 that represents a charged battery. A plurality of indicator lamps 25 show the actual state of charge of the battery. It is noted that while the term "lamp" is used to refer to indicators which are illuminated or flashed, lamp is intended to include light emitting diodes (LED's) and any other form of illumination device now in existence or later developed which is immediately or remotely associated with the area to be illuminated, for example by fiber optics.

A lift truck representation 28 is formed on the display panel 10. Associated with the lift truck representation 28 are a set of disks L1 - L4 that size-wise represent the maximum permissible load at different heights of the forks; several height zone indicator lamps C1 - C4, which indicate the recommended height range to which the forks of the lift truck should be raised for a given actual load on the forks; and, fork height lamps H1 - H4 and 30 which represent the actual height of the forks with the fork height lamp 30 indicating when the forks are in a free lift zone beneath the collapsed height for the truck. Also on the display panel 10 are an operator correctable error indicator 35 (an ISO standard symbol), a maintenance needed indicator 40, a performance tune pushbutton 45, a truck hour usage pushbutton 50 represented by a stylized hourglass symbol, a maintenance pushbutton 55, a text display screen 60, and three push buttons 65, 70 and 75 for controlling the input of data to the text display screen 60.

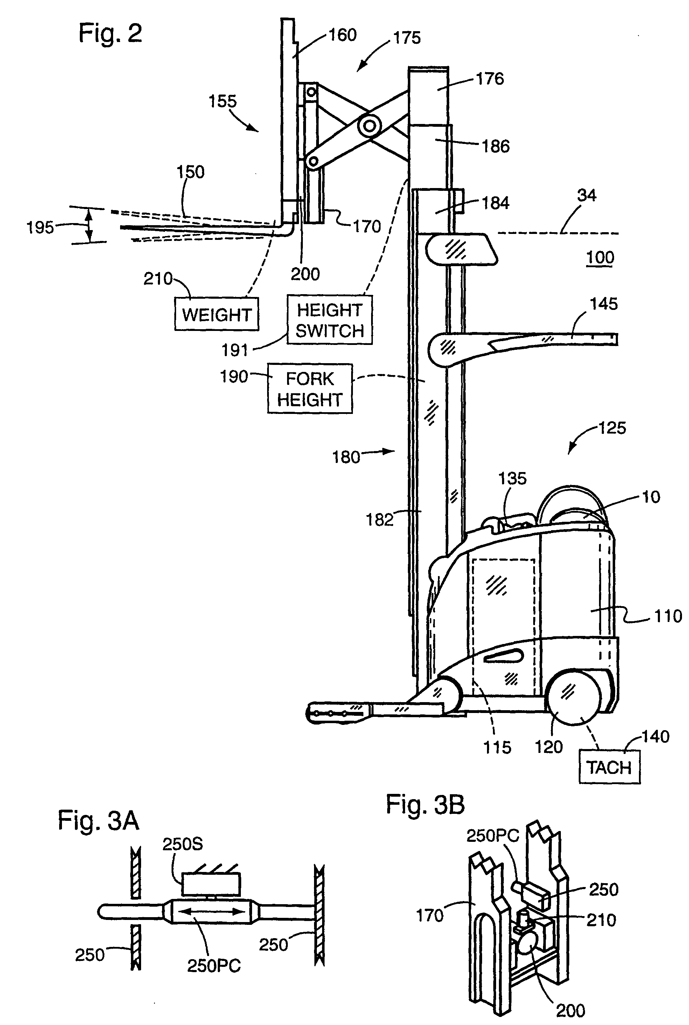

Fig. 2 illustrates a typical rider reach fork lift truck 100, such as Series RR or RD lift trucks manufactured by Crown Equipment Corporation, the assignee of the present application. The truck 100 includes a power unit 110 which houses a battery 115 for supplying power to a traction motor (not shown) connected to a steerable wheel 120 and to hydraulic motors (not shown) which supply power to several different systems, such as mast, fork and reach hydraulic cylinders. An operator's compartment 125 in the power unit 110 is provided with a steering tiller (not shown) for controlling the direction of travel of the truck 100, and a control handle 135 for controlling travel speed and direction as well as fork height, extension, and tilt. The speed of the truck 100 is measured by a tachometer, represented at 140, included within the truck 100 in a conventional manner. An overhead guard 145 is placed over the operator's compartment 125.

A pair of forks 150 are mounted on a fork carriage mechanism 155 which is in turn mounted on a carriage assembly 170. A load back rest 160 is provided, as shown. As described in U.S. Patent No. 5,586,620 which is incorporated herein by reference, the carriage assembly 170 is attached to an extensible mast assembly 180 by a scissors reach mechanism 175 extending between the carriage assembly 170 and a reach support 176. The reach support 176 is mounted to the mast assembly 180 which includes a fixed, lower mast member 182 and nested movable mast members 184 and 186. A hydraulic cylinder (not shown) is operated by control handle 135 to control the height of the forks 150. As shown in Fig. 2, the mast is raised and the reach mechanism 175 is extended.

The height of the forks 150 is measured by a digital encoder, represented at 190, which may be similar to the device shown in U.S. Patent No. 5,103,226 which is incorporated herein by reference. In the illustrated embodiment, the height of the forks 150 is also detected by a height switch, represented at 191, which is mounted on the reach support 176 and actuated whenever the height switch 191 is disengaged from a track (not shown) on the mast member 186. The height switch 191 is positioned so that it is actuated whenever the top of the load back rest 160 extends above the top of the fixed mast member 182, i.e., the collapsed height as shown by dashed line 34. As used herein, the term "collapsed height" refers to the top of the lower mast member 182 as represented by the dashed line 34. Thus, "below the collapsed height" means that neither the back rest 160 nor either of the mast members 184 or 186 extends above the dashed line 34.

The height switch 191 can be mounted on the reach support 176 at a height corresponding to the height of the back rest 160 if different height load back rests are used. However, it may be preferred to mount the height switch 191 at a single position corresponding to the tallest load back rest which is provided for a given series of trucks. In this way, the switch 191 is ensured to be actuated at or before extension of the back rest above the top of the mast member 182 regardless of which back rest may be used on a truck.

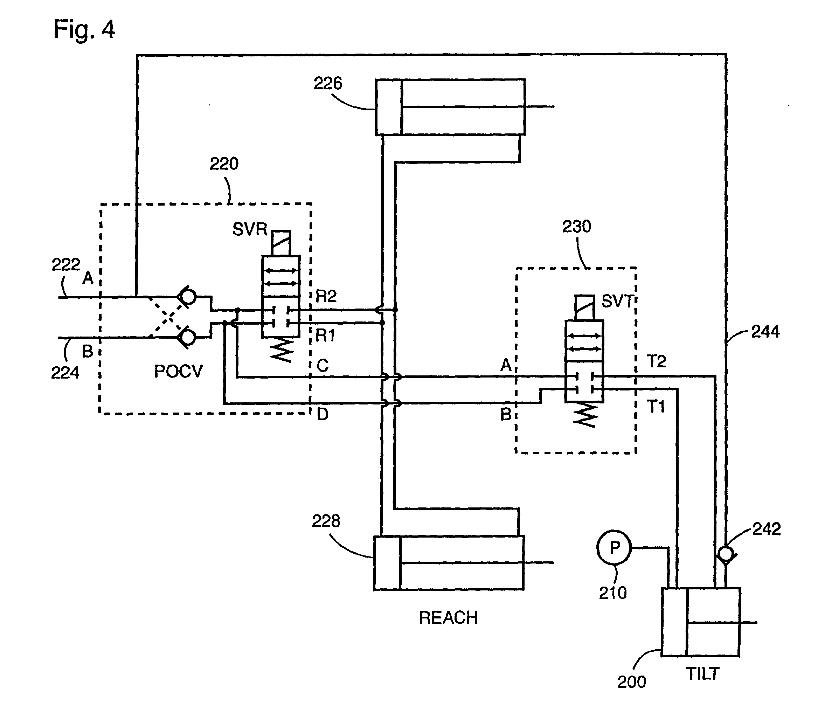

The forks 150 may be tilted through a range shown by the arrow 195 by means of a hydraulic tilt cylinder 200 located between a bracket attached to the forks 150 and the carriage assembly 170, see Figs. 2 and 3. The weight of the load on the forks 150 is measured by a pressure transducer which serves as a weight sensor 210 that is attached to a hydraulic line connected to the tilt cylinder 200, see Fig. 4. A tilt switch 250 is actuated whenever the forks 150 are at their full tilt down or full tilt back positions, as will be explained.

Referring now to Fig. 4, which is a hydraulic schematic diagram for the reach, side shift and tilt functions of the fork lift truck 100 shown in Fig. 2, hydraulic fluid under pressure is supplied to a hydraulic manifold 220 in the carriage assembly 170 by hydraulic input lines 222 and 224. Within the manifold 220 are a pair of check valves POCV and a solenoid valve SVR which controls and directs hydraulic fluid to a pair of reach cylinders 226 and 228.

Hydraulic fluid under pressure is also applied to a manifold 230 which includes a solenoid valve SVT for controlling the operation of the tilt cylinder 200. A load sensing check valve 242 is included in a return line 244, which is in turn connected to the input line 222. The weight sensor 210 is connected to one side of the tilt cylinder 200 to monitor the pressure of the hydraulic fluid in the tilt cylinder 200 which pressure is a function of the weight being carried by the forks 150, provided, of course, that the forks 150 have not reached a mechanical stop (not shown) due to tilting movement of the forks 150. Tilting of the forks 150 is monitored by the switch 250 which is activated by the forks 150 immediately prior to the forks 150 reaching the mechanical stop so that the tilt switch 250 is actuated whenever the forks 150 are in their full tilt down or full tilt back positions. Preferably, the tilt switch 250 comprises a single switch 250S which is engaged with a plunger/cam 250PC which is spring biased to extend outside the tilt switch 250, see Figs. 3 and 3A. Advantageously, the switch 250S is activated whenever the plunger 250PC is forced back into the tilt switch 250 or extended a defined distance beyond the tilt switch 250 so that both full tilt down and full tilt back positions can be detected using the single switch 250S.

In this way, the tilt switch 250 is actuated when the weight signal generated by the weight sensor 210 may not be accurate due to the forks 150 being tilted into contact with the mechanical stop. As illustrated in 5, the tilt switch 250 and more particularly the switch 250S includes a normally closed contact which is connected in series with the weight sensor 210 so that the signal from the weight sensor 210 is interrupted whenever the forks 150 are tilted into engagement with the mechanical stop and the weight signal is not accurate. Whenever the forks 150 are at either the full tilt down position or full tilt back position, as detected by the tilt sensor or tilt switch 250, and the weight sensor 210 does not accurately reflect the weight of the load on the forks 150, none of the indicators of the display panel 10 are energized and the message MONITOR DISABLED is displayed on the text display screen 60.

The weight sensor 210 is preferably a transducer which provides an output signal proportional to weight. The output signal from the weight sensor 210 is used to determine the weights of the loads on the forks 150 and thereby the height zone lamps C1 - C4 to be lighted to indicated recommended height ranges for the loads. The weight sensor 210 can also be a simple switch, in which case, the only display would be weight above and below the threshold level of the switch, or in other words, above and below a predetermined level.

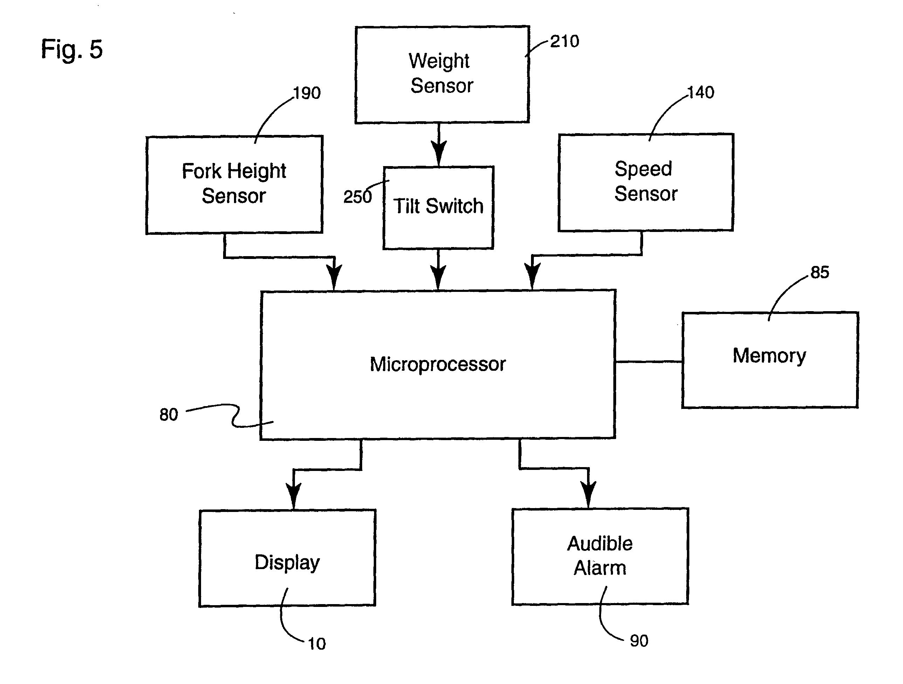

The electrical block diagram of Fig. 5 shows a speed sensor illustrated as the tachometer 140, the fork height sensor 190, the weight sensor 210, and the tilt switch 250 connected to a control circuit taking the form of a microprocessor 80 in the illustrated embodiment which processes the input data from these devices in accordance with data representative of the truck 100 recorded in a storage device represented by a memory 85. The results of this processing are then displayed on the display panel 10, and, if necessary, audible alarm 90 is sounded. The microprocessor includes a lamp flashing mechanism.

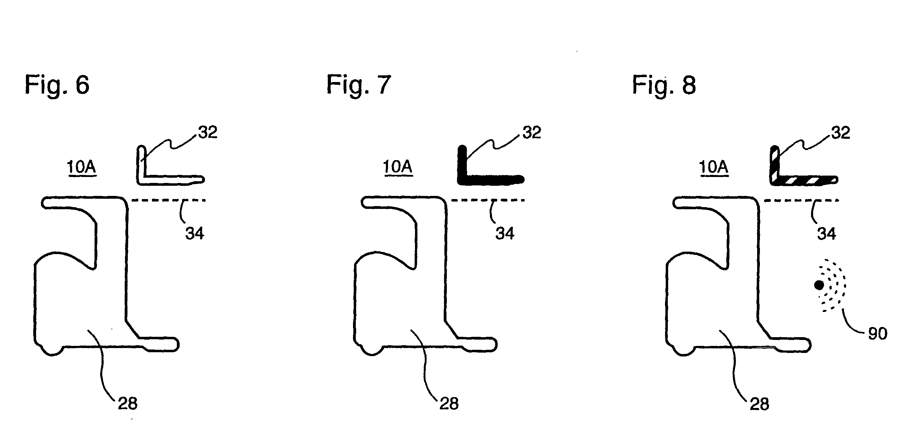

Referring now to Figs. 6 - 8, wherein a second simplified embodiment of a display panel 10a for a lift truck without a weight sensor but having a sensor that detects when the forks are above the collapsed height represented by the dashed line 34 and a truck speed sensor. Fig. 6 shows a representation 28 of a lift truck with the forks represented by a fork lamp 32 which is not energized when the forks are below the collapsed height. In Fig. 7, fork lamp 32 is on or energized when the forks of the truck are above the collapsed height line 34 and the vehicle's speed is below a predetermined value. Fig. 8 shows the fork lamp 32 flashing and an audio alarm 90 sounding when the forks of the truck are above the collapsed height 34 and the truck's speed is above a predetermined value.

Reference is now made to Figs. 2, 5 and 9 - 21. The weight of the load on the forks 150 is measured by the weight sensor 210 and used by the microprocessor 80, together with truck data stored in the memory 85, to determine a recommended height to which a load of that weight should be lifted. The truck load weight/recommended height data in the illustrated embodiment is based on having the load center 24 inches from the back of the load back rest 160 and 24 inches above the forks 150. However, in the present invention, truck data can be provided for a plurality of load centers with the appropriate set of data being manually selected by the owner or operator of the truck depending upon specific loads being handled. Specific data for one of a plurality of load centers can also be selected automatically if a load moment sensor is available on the truck.

As is well known, the load weight (height of the forks) that is recommended to be carried by a fork lift truck is a function of the height of the forks (weight of the load); the higher the forks (load weight), the lower the recommended load (fork height), as represented by symbols L1 - L4 in Fig. 1. According to the present invention, the height zone indicators C1 - C4 are energized to indicate the recommended maximum height or range of height to which the forks should be raised for the weight of a sensed load on the forks. For example for a truck represented by height/weight specification data shown in Table 1. the height zone indicator lamps C1 - C4 are energized as shown. Thus, if the sensed weight on the forks is less than or equal to 2500 pounds (1134 kg), for example, all the height zone indicator lamps C1 - C4 are illuminated since for such weights there is no limitation on the recommended height to which the forks can be raised. Therefore, when the actual weight is less or equal to 2500 pounds (1134 kg), the maximum recommended fork height is 321 inches (815 cm), the maximum lift height for the truck. As another example of interpreting Table 1, if the sensed weight on the forks is 3200 pounds (1452 kg), then only lamps C1 and C2 would be illuminated, and the maximum recommended fork height is 270 inches (685 cm). Other examples are described below with reference to the drawing figures.

**Table 1**

| Indicator | Weight in pounds (kg) | Max. Height in inches (cm) |
|---|---|---|
| C4 | ≤2500 (1134) | 321 (815) |
| C3 | ≤ 3000 (1361) | 300 (762) |
| C2 | ≤4000 (1814) | 270 (685) |
| C1 | ≤4500 (2041) | 240 (610) |

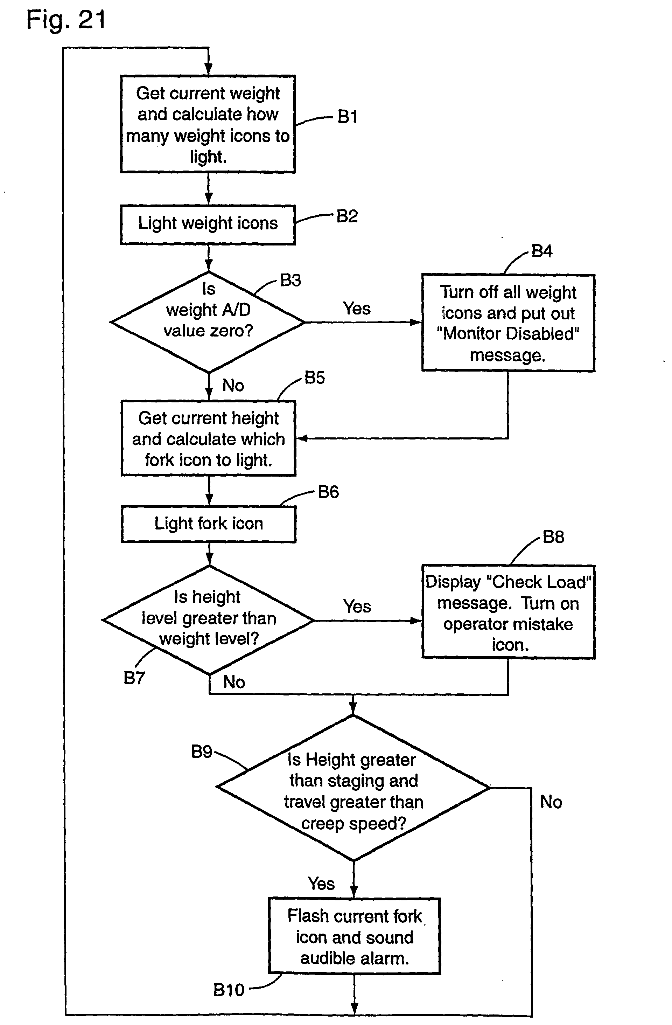

If the interrelated specifications for load weight, fork height and truck speed are violated, the microprocessor 80 lights certain lamps on the display panel 10 or 10a. The microprocessor 80 may also make some lamps flash, sound an audible alarm, and in some cases, generate a text message on the text display screen 60, as illustrated in the flow chart of Fig. 21 and shown in Table 2 for the illustrated embodiment.

**Table 2**

| HEIGHT/WEIGHT LIMITS | SPEED LIMIT | LAMP 35 | ALARM 90 | TEXT 60 |
|---|---|---|---|---|
| Under Spec | < Creep | Off | Off | None |
| Under Spec | ≥ Creep | Off | On | None |
| Over Spec | < Creep | On | On | CHECK LOAD |
| Over Spec | ≥ Creep | On | On | CHECK LOAD |

The microprocessor 80 continuously processes the signals coming in from the weight sensor 210, the fork height sensor 190 and the speed sensor 140. While these signals can be processed in a number of ways for the present invention, Fig. 21 illustrates a currently preferred processing flow. In Fig. 21, the current weight signal is read and used to calculate the recommended fork height for the corresponding weight and the number of height zone indicator lamps C1 - C4 or icons which should be illuminated to advise the truck operator of the recommended maximum fork lift height, see block B1. The corresponding height zone indicator icons are then illuminated, see block B2.

A check is then made to determine whether the forks 150 have been tilted to the point that they contact the mechanical rest as indicated by actuation of the tilt switch 250. If the tilt switch 250 is actuated, the signal from the weight sensor 210 is interrupted which is sensed at block B3 by the value of the weight signal from an analog to digital (A/D) converter is equal to zero. If so, all weight icons and other indicators are turned off and a MONITOR DISABLED message is displayed on the text display screen 60, see block B4.

The current fork height signal is read and used to determine which one of the fork height lamps H1 - H4 or icons to illuminate to indicate to the operator of the truck the height or height zone of the forks 150, see block B5. The determined fork height icon is then illuminated, see block B6. Next, the fork height is compared to the recommended fork height based on the weight of the load on the forks 150 as determined in block B1, see block B7. If the fork height is greater than or equal to the recommended fork height based on load weight or weight level, a CHECK LOAD message is displayed on the text display screen 60 and the operator correctable error indicator 35 is illuminated, see block B8. If the fork height is less than the weight level, no such action is taken.

The fork height is then compared to the staging or collapsed height for the truck and the signal from the truck speed sensor 140 is read, see block B9. If the fork height is greater than the collapsed height for the truck and the travel speed is greater than a predetermined maximum value, for example 1.5 miles per hour (mph), also known as creep speed, then the illuminated fork icon is flashed and the audible alarm 90 is sounded, see block B10. This processing sequence is then repeated to maintain the alerting system of the present invention up to date for current truck operating conditions. These operations will be clarified by the following examples which represent specific truck operating conditions and how the alerting system responds.

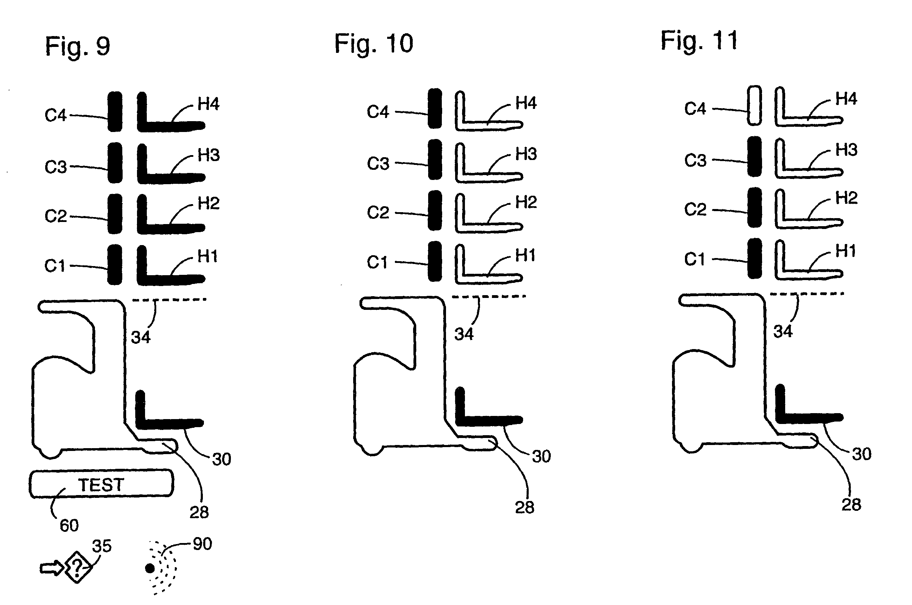

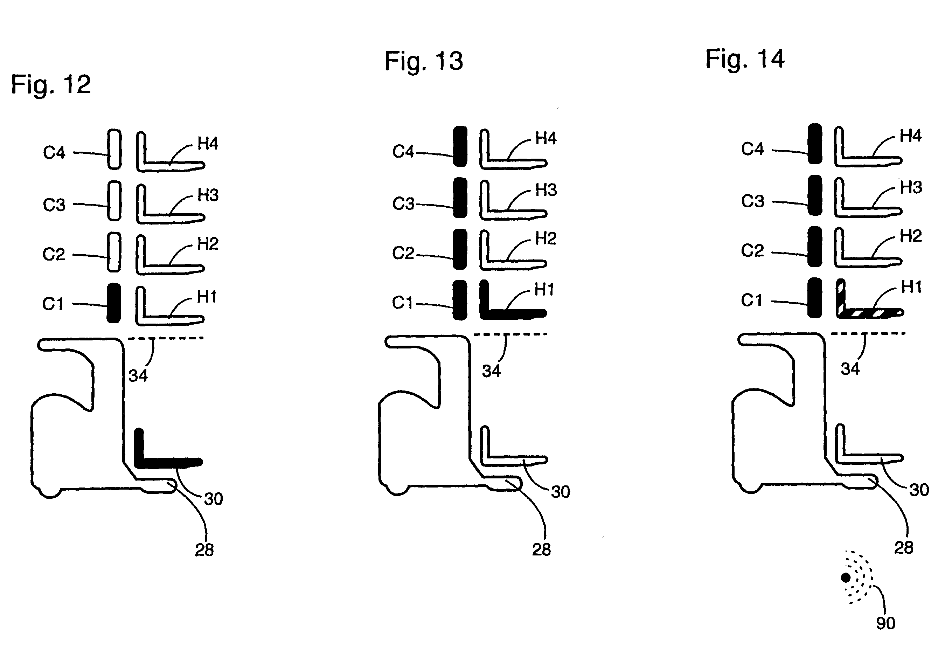

In operation, when the fork lift truck 100 is initially turned on, the microprocessor 80 initiates a self check procedure which causes each of the lamps in the display to be energized, displays the word TEST on the text display screen 60, and causes the audible alarm 90 to sound briefly as shown in Fig. 9. The indicator lamps shown in Figs. 6 to 20 may be off, on or flashing. In the drawings, when off, a lamp is represented by an outline, for example as shown by H1 - H4 in Fig. 10; when on, a lamp is represented by a solid shape, for example as shown by C1 - C4 in Fig. 10; when flashing, a lamp is represented by cross-hatching, for example as shown by H1 in Fig. 14.

If the weight of the load on the forks 150, as detected by the weight sensor 210, is below the weight permitted for elevation of the forks to full height, and the forks are below the collapsed height, then the display will be as shown in Fig. 10. All of the height zone indicator lamps C1 - C4 are illuminated indicating that the operator may raise the forks 150 to their maximum height. It is to be understood that while four zones are described, the display may include any reasonable number of zones greater than four or less than four. The lamp 30 is also energized to indicate that the forks are in a free lift zone beneath the collapsed height for the truck.

If the weight of the load on the forks 150 exceeds the weight recommended for full height extension of the forks, then the display will appear as shown in Figs. 11 and 12. In Fig. 11, the weight of the load on the forks 150 is less than or equal to 3000 pounds so that the forks 150 should not be raised above the height represented by height zone indicator C3 and, accordingly, the height zone indicators C1 - C3 are illuminated while the height zone indicator C4 is not illuminated. Similarly, in Fig. 12, if additional weight is added to the forks 150, the maximum height should be limited to the height represented by illumination of only the height zone indicator C1.

When the forks 150 are moved above the collapsed height represented by the dashed line 34 in Fig.2, then the lamp 30 is extinguished. The actual fork height (in zones) is represented by energizing one of the fork height indicator lamps H1 - H4. Thus, in Fig. 13 - 16, the forks 150 are shown as being raised above the collapsed height, and therefore the forks and/or mast of the truck extends above the collapsed height, i.e., dashed line 34, which represents the minimum height of the truck, and into the first zone, H1. In Fig. 13 the weight of the load permits full height extension of the mast or maximum height of the forks, as shown by illumination of all of the height zone indicator lamps C1 - C4, and the speed of the truck, as monitored by speed sensor or tachometer 140, is below 1.5 mph, creep speed. Fig. 14 is similar to Fig. 13 except that the truck's speed is equal to or greater than 1.5 mph, creep speed. As shown, the lamp H1 is flashing and an audible alarm 90, typically a chime, is sounding to alert the operator to the operating conditions.

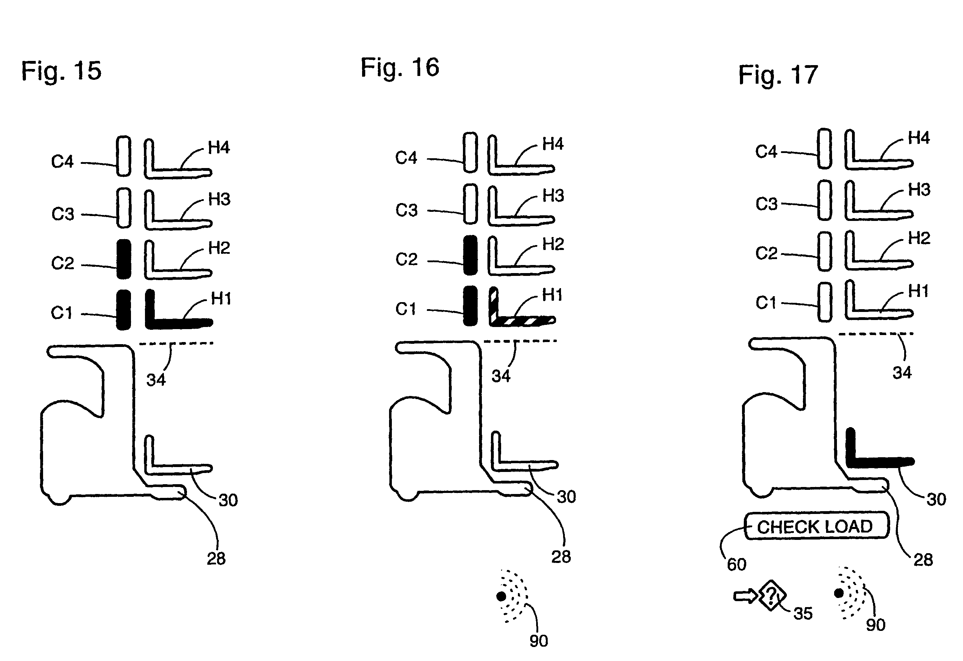

Figs. 15 and 16 are similar to Fig. 13 and 14, but the load on the forks is greater so that a lower maximum fork height is recommended. That is, the maximum recommended fork height is limited to the height zone indicated by the height zone indicator C2. Accordingly, to be in compliance with recommend truck operation, the forks 150 should only be raised to the height represented by height zone lamp C2, or fork height zone H2. Of course, the operator can move the forks to any height since the invention of the present application does not control or limit truck operation but only alerts the operator to operating conditions which should be of concern to the operator.

If the load on the forks is greater than the recommended maximum for the truck, with the forks 150 in the lowermost position, then the display 10 appears as shown in Fig. 17. None of the lamps C1 - C4 are energized, since the weight on the forks is above the maximum for even zone C1, the operator correctable error indicator 35 is energized, and a message CHECK LOAD is displayed on the text display screen 60.

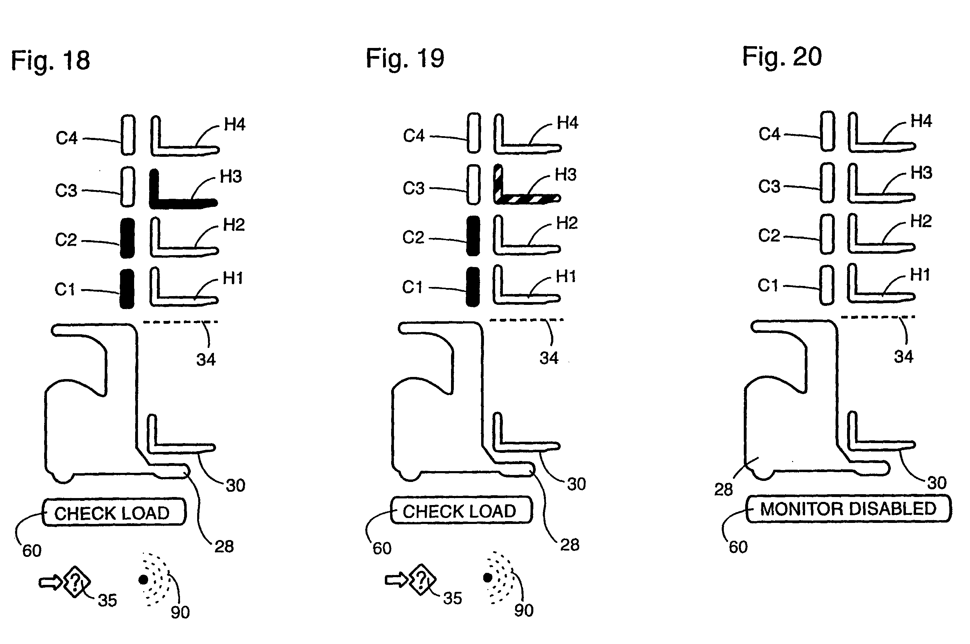

Similarly, if the forks are raised above the recommended height based on the sensed weight of the load on the forks 150, the display appears as shown in Fig. 18. In both Figs. 17 and 18, the speed of the truck is less than the predetermined creep speed. If the speed is increased to equal or exceed the so-called creep speed, then the display will appear as shown in Fig. 19 where the fork height indicator lamp H3 is flashing and the audible alarm 90 is sounding.

Having thus described the invention of the present application in detail and by reference to preferred embodiments thereof, it will be apparent that modifications and variations are possible without departing from the scope of the invention defined in the appended claims.

## Claims

1. A fork lift truck (100) comprising:
a truck speed sensor (140);
a mast (180) carrying forks (150) which can be moved in height between a lowered position and desired raised positions;
a fork height sensor (190, 191); and
an alerting system indicating status of said fork height and truck speed to an operator of said truck, said alerting system comprising:
a control circuit (80) responsive to signals generated by said truck speed sensor and said fork height sensor; and
an indicator (32, H1 - H4) connected to an output of said control circuit, said indicator being illuminated by said control circuit when said forks are raised above a predetermined height and flashed by said control circuit when said forks are raised above said predetermined height and truck speed is above a predetermined speed.

2. A fork lift truck (100) as claimed in claim 1 wherein said alerting system further comprises an audible alarm (90) connected to an output of said control circuit (80), said audible alarm being sounded by said control circuit whenever said forks (150) are raised above said predetermined height and truck speed is above said predetermined speed.

3. A fork lift truck (100) as claimed in claim 1 wherein said alerting system further comprises a representation (28) of a fork lift truck and wherein said indicator (32, H1 - H4) is in the form of a fork positioned above said truck representation.

4. A fork lift truck (100) as claimed in claim 1 wherein said fork height sensor (191) senses whether said forks are at or above a collapsed height (34) or below a collapsed height (34).

5. A fork lift truck (100) as claimed in claim 1 wherein said indicator (32, H1 - H4) comprises a lamp.

6. A fork lift truck (100) comprising:
a mast (180) carrying forks (150) which can be moved in height between a lowered position and desired raised positions;
a fork height sensor (190, 191);
a fork load weight sensor (210); and
an alerting system indicating sensed fork height and sensed fork load weight to an operator of said truck, said alerting system comprising:
a storage device (85) storing data correlating recommended fork heights and fork load weights;
a control circuit (80) responsive to said data from said storage device and signals generated by said fork height sensor and said fork load weight sensor;
a plurality of height zone indicators (C1 - C4) coupled to said control circuit, said height zone indicators being selectively illuminated by said control circuit according to sensed weight of a load on said forks;
a plurality of fork height indicators (H1 - H4) coupled to said control circuit, said fork height indicators being selectively illuminated according to the height of said forks; and
an operator correctable error indicator (35) coupled to said control circuit for alerting an operator of said truck whenever said forks are raised above a recommended maximum height for a given load weight.

7. A fork lift truck (100) as claimed in claim 6 wherein at least one of said indicators (C1 - C4, H1 - H4, 35) comprise a lamp.

8. A fork lift truck (100) as claimed in claim 6 wherein said operator correctable error indicator (35) is activated when a given load weight exceeds a maximum load weight for said fork lift truck.

9. A fork lift truck (100) as claimed in claim 6 further comprising a truck speed sensor (140) coupled to said control circuit (80), said control circuit causing said selectively illuminated fork height indicators (H1 - H4) to flash when truck speed exceeds a predetermined value and sensed fork height is above a collapsed height (34) for said fork lift truck.

10. A fork lift truck (100) as claimed in claim 9 wherein said alerting system further comprises an audible alarm (90) coupled to said control circuit (80), said control circuit sounding said audible alarm when truck speed exceeds said predetermined value and sensed fork height is above a collapsed height for said fork lift truck.

11. A fork lift truck (100) as claimed in claim 10 wherein said alerting system further comprises a text display screen (60) to visually instruct said operator concerning sensed fork height, sensed fork load weight and sensed truck speed.

12. A fork lift truck (100) as claimed in claim 6 further comprising a hydraulic tilt cylinder (200) for tilting said forks (150) through a fork tilt range (195), said weight sensor (210) being coupled to said tilt cylinder for monitoring the pressure of hydraulic fluid in said tilt cylinder which pressure is a function of the weight being carried by said forks.

13. A fork lift truck (100) as claimed in claim 12 further comprising a fork tilt monitoring device (250), said fork tilt monitoring device being actuated when said forks (150) are tilted to extremes of said fork tilt range (195) and being coupled to said control circuit (80) to disable said alerting system when actuated.

14. A fork lift truck (100) as claimed in claim 13 wherein said fork tilt monitoring device (250) comprises a switch.

15. A fork lift truck (100) as claimed in claim 12 wherein said alerting system further comprises a text display screen (60) coupled to said control circuit (80) for visually instructing said operator concerning sensed fork height, sensed fork load weight and sensed truck speed.

16. A fork lift truck (100) as claimed in claim 15 further comprising a fork tilt monitoring device (250), said fork tilt monitoring device being actuated when said forks (150) are tilted to extremes of said fork tilt range (195) and being coupled to said control circuit (80) to disable said alerting system when actuated, said control circuit displaying a monitor disabled message on said text display screen (60) when said fork tilt monitoring device is actuated.

17. A fork lift truck (100) comprising:
a mast (180) carrying forks (150) which can be moved in height between a lowered position and desired raised positions;
a truck speed sensor (140);
a fork height sensor (190, 191);
a fork load weight sensor(210); and
an alerting system indicating sensed fork height, sensed fork load weight and sensed truck speed to an operator of said truck, said alerting system comprising:
a control circuit (80) receiving input signals from said truck speed sensor, said fork height sensor and said load weight sensor;
a storage device (85) storing data correlating fork load weights and recommended fork heights;
a representation (28) of a fork lift truck on a display (10);
a plurality of height zone indicators (C1 - C4) on said display and responsive to said control circuit for representing load weight on said forks, said plurality of height zone indicators being placed above said representation of a fork lift truck in a vertical column and being selectively illuminated according to sensed load weight on said forks;
a plurality of fork height indicators (30, H1 - H4) on said display and responsive to said control circuit for representing sensed height of said forks, said plurality of fork height indicators including one fork height indicator (30) placed relative to said representation of a lift truck in a position representing a lowered position of said forks, and a remainder (H1 - H4) of said plurality of fork height indicators equal in number to said plurality of height zone indicators and placed horizontally opposite therefrom, said plurality of fork height indicators being selectively illuminated by said control circuit according to sensed fork height and said remainder of said plurality of fork height indicators being selectively flashed by said control circuit whenever said forks are raised above a predetermined height and the speed of said truck is above a predetermined speed; and
an operator error indicator (35) activated by said control circuit to provide an output signal to alert said operator whenever said forks are raised above a recommended height for a given load weight.

18. A fork lift truck (100) as claimed in claim 17 wherein at least one of said indicators (C1 - C4, H1 - H4, 35) comprise a lamp.

19. A fork lift truck (100) as claimed in claim 17 wherein said operator error indicator (35) is a symbol which is illuminated to indicate when said forks are raised above a recommended height for a given load weight.

20. A fork lift truck (100) as claimed in claim 17 wherein said alerting system further comprises a text display screen (60) to visually instruct said operator concerning sensed fork height, sensed fork load weight and sensed truck speed.

21. A fork lift truck (100) as claimed in claim 17 further including an audible alarm (90) which is sounded by said control circuit (80) whenever said forks (150) are above a predetermined height and sensed speed of said fork lift truck exceeds a predetermined value.

22. A fork lift truck (100) as claimed in claim 17 wherein only one of said plurality of fork height indicators (H1 - H4) is energized at any time during operation of said truck.

23. A method of displaying a recommended maximum height to which forks (150) of a fork lift truck (100) should be raised under a given load condition comprising the steps of:
measuring weight (210) of a load carried by said forks;
measuring height (190,191) of said forks;
comparing (80) said height of said forks to said weight of said load;
providing a visible indication (21, H1 - H4) whenever the height of said forks exceeds a recommended height limit dictated by a measured load weight;
monitoring speed of said truck (100); and
providing a visible (32, H1 - H4) and audible indication (90) whenever said speed of said truck (100) exceeds a predetermined speed and said forks (150) are raised above a predetermined height.

## Patentansprüche

1. Gabelstapler-Fahrzeug (100) mit folgenden Eigenschaften:
- einem Fahrzeug-Geschwindigkeitssensor (140);
- einem Pfosten oder Träger (180) zum Tragen einer Gabel oder Zinken (150), welche in Höhenrichtung bewegbar sind, zwischen einer abgesenkten und einer gewünschten angehobenen Position oder Lage;
- einem Sensor (190,191) für die Höhenlage oder die Höhe der Zinken bzw. der Gabel; und
- einem Warnsystem, welches den Status der Zinken- oder Gabelhöhe und der Fahrzeug-Geschwindigkeit einem Benutzer des Fahrzeuges vermittelt oder anzeigt, welches Alarmsystem folgendes umfasst:
- eine Steuerschaltung (80), ansprechend auf Signale, die von dem Fahrzeug-Geschwindigkeitssensor und dem Sensor für die Höhenlage oder die Höhe der Gabel oder Zinken erzeugt werden; und
- eine Anzeigeeinrichtung (32,H1 bis H4), welche mit einem Ausgang der Steuerschaltung verbunden ist, wobei die Anzeigeeinrichtung von der Steuerschaltung beleuchtet oder erleuchtet wird, wenn die Gabel oder die Zinken über eine vorbestimmte Höhe angehoben werden, und die von der Steuerschaltung zum Blinken veranlasst wird, wenn die Gabel oder die Zinken über die vorbestimmte Höhe angehoben werden und die Fahrzeug-Geschwindigkeit eine vorbestimmte Geschwindigkeit überschreitet.

2. Gabelstapler (100) nach Anspruch 1, wobei das Alarm- oder Wachsystem weiterhin einen hörbaren Alarm (90) aufweist, welcher mit einem Ausgang der Steuerschaltung (80) verbunden ist, wobei der hörbare Alarm von der Steuerschaltung aktiviert wird, wenn die Gabel oder die Zinken (150) über die vorbestimmte Höhe angehoben werden und die Fahrzeuggeschwindigkeit die vorbestimmte Geschwindigkeit überschreitet.

3. Gabelstapler (100) nach Anspruch 1, wobei das Alarmsystem weiterhin eine Abbildung (28) eines Gabelstaplers aufweist und wobei die Anzeigeeinrichtung (32,H1 bis H4) die Form einer Gabel besitzt und über der Fahrzeug-Abbildung positioniert ist.

4. Gabelstapler (100) nach Anspruch 1, wobei der Sensor (191) für die Höhenlage oder die Höhe der Gabel abtastet, ob die Gabel oder die Zinken nahe oder über einer Einsturzhöhe (34) oder unter einer Einsturzhöhe (34) sind.

5. Gabelstapler (100) nach Anspruch 1, wobei die Anzeigeeinrichtung (32,H1 bis H4) eine Lampe aufweist.

6. Gabelstapler (100), welcher folgende Eigenschaften umfasst:
- einen Masten oder Träger (180), welcher eine Gabel oder Zinken (150) trägt, welche in Höhenrichtung bewegbar sind, zwischen einer abgesenkten und einer gewünschten, angehobenen Position oder Lage;
- einen Sensor (190,191) für die Höhenlage oder die Höhe der Gabel;
- einen Sensor (210) für das Lade- oder Belastungsgewicht der Gabel; und
- ein Alarmsystem, welches die abgetastete Gabelhöhe und das abgetastete Belastungsgewicht an einen Benutzer des Fahrzeuges vermittelt oder anzeigt, welches Alarmsystem folgendes umfasst:
- einen Speicher (85) zum Speichern von Daten, welche empfohlene Gabelhöhen und Gabelgewichte aufeinander abstimmen oder in Beziehung setzen;
- eine Steuerschaltung (80), ansprechend auf die Daten in dem Speicher, und auf Signale, erzeugt von dem Sensor für die Höhenlage oder die Höhe der Gabel und dem Sensor für die Last oder Nutzlast der Gabel;
- eine Mehrzahl von Anzeigen (C1 bis C4) für die Höhenlage oder die Höhenzone, verbunden mit der Steuerschaltung, wobei die Anzeige für die Höhenlage oder die Höhenzone wahlweise von der Steuerschaltung, gemäß dem abgetasteten Gewicht einer Ladung auf den Gabel, beleuchtet werden;
- eine Mehrzahl von Anzeigen (H1 bis H4) für die Höhenlage oder die Höhe der Gabel oder der Zinken, verbunden mit der Steuerschaltung, wobei die Anzeigen für die Höhenlage oder die Höhe wahlweise gemäß der Höhe der Gabel beleuchtbar sind; und
- einen - von einem Benutzer korrigierbaren - Fehlerindikator (35), der mit der Steuerschaltung verbunden ist, um einen Benutzer des Fahrzeugs zu warnen, wenn oder wann immer die Gabel oder Zinken über eine empfohlene maximale Höhe für eine gegebene Last oder Nutzlast angehoben werden.

7. Gabelstapler (100) nach Anspruch 6, wobei zumindest eine der Anzeigen (C1 bis C4,H1 bis H4,35) eine Lampe aufweist.

8. Gabelstapler (100) nach Anspruch 6, wobei der vom Benutzer korrigierbare Fehlerindikator (35) aktiviert wird, wenn die gegebene Last oder Nutzlast die maximale Last oder Nutzlast für den Gabelstapler überschreitet.

9. Gabelstapler (100) nach Anspruch 6, welcher weiterhin einen Fahrzeug-Geschwindigkeitssensor (140) aufweist, verbunden mit der Steuerschaltung (80), wobei die Steuerschaltung die wahlweise beleuchteten Anzeigen (H1 bis H4) für die Gabel veranlasst zu blinken, wenn die Fahrzeuggeschwindigkeit einen vorgegebenen Wert überschreitet und die abgetastete (gemessene) Gabelhöhe über der Fall- oder Einsturzhöhe (34) für den Gabelstapler liegt.

10. Gabelstapler (100) nach Anspruch 9, wobei das Alarmsystem weiterhin einen hörbaren Alarm (90) aufweist, verbunden mit der Steuerschaltung (80), wobei die Steuerschaltung den hörbaren Alarm abgibt, wenn die Fahrzeuggeschwindigkeit den vorgegebenen Wert überschreitet und die abgetastete Gabelhöhe über der Einsturzhöhe für den Gabelstapler liegt.

11. Gabelstapler (100) nach Anspruch 10, wobei das Alarmsystem weiterhin einen Textanzeige-Bildschirm (60) aufweist, um den Benutzer visuell über die abgetastete Gabelhöhe, die abgetastete Last oder Nutzlast der Gabel und die abgetastete Fahrzeuggeschwindigkeit zu informieren.

12. Gabelstapler (100) nach Anspruch 6, welcher weiterhin einen hydraulischen Kippzylinder (200) zum Kippen der Gabel (150) in einem oder über einen Kippbereich (195) für die Gabel aufweist, wobei der Sensor (210) für die Last oder Nutzlast mit dem Kippzylinder zum Beobachten oder Kontrollieren des Drucks der Hydraulikflüssigkeit verbunden ist, welcher Druck von dem Gewicht, das von den Gabel getragen wird, abhängt.

13. Gabelstapler (100) nach Anspruch 12, welcher weiterhin ein Monitor- oder Kontrollgerät (250) für das Kippen der Gabel aufweist, wobei das Neigungs-Kontrollgerät der Gabel anspricht oder aktiviert wird, wenn die Gabel (150) bis an die Endstellungen des Kippbereiches (195) der Gabel gekippt wird, und welches mit der Steuerschaltung (80) verbunden ist, um das Alarmsystem abzuschalten, wenn es angesprochen hat.

14. Gabelstapler (100) nach Anspruch 13, wobei das Monitor- oder Kontrollgerät (250) für die Neigung oder das Kippen der Gabel einen Schalter aufweist.

15. Gabelstapler (100) nach Anspruch 12, wobei das Alarmsystem weiterhin einen Textanzeige-Bildschirm (60) aufweist, der mit der Steuerschaltung (80) gekoppelt ist, um den Benutzer visuell über die abgetastete Gabelhöhe, die abgetastete Last oder Nutzlast der Gabel und die abgetastete Fahrzeug-Geschwindigkeit zu informieren.

16. Gabelstapler (100) nach Anspruch 15, welcher weiterhin ein Monitor- oder Kontrollgerät (250) für ein Neigen oder Kippen der Gabel aufweist, wobei das Monitor- oder Kontrollgerät anspricht, wenn die Gabel (150) bis an die Endstellungen des Gabel-Kippbereiches (195) geneigt oder gekippt werden, und welches verbunden ist mit der Steuerschaltung (80), um das Alarmsystem abzuschalten, wenn es angesprochen hat, wobei die Steuerschaltung auf dem Textanzeige-Bildschirm (60) eine Kontroll-Nachricht anzeigt, dass abgeschaltet ist, wenn das Monitor- oder Kontrollgerät für die Gabelneigung angesprochen hat oder aktiviert ist.

17. Gabelstapler-Fahrzeugeinrichtung (100), mit folgenden Eigenschaften:
- einem Masten oder Träger (180), welcher eine Gabel oder Zinken (150) trägt, welche in Höhenrichtung bewegbar sind, zwischen einer abgesenkten und einer angehobenen Position oder Lage;
- einem Fahrzeug-Geschwindigkeitssensor (140);
- einem Sensor (190,191) für die Höhenlage oder die Höhe der Zinken bzw. Gabel;
- einem Sensor (210) für die Last oder Nutzlast der Gabel; und
- ein Alarmsystem, welches die abgetastete Gabelhöhe, die abgetastete Last oder Nutzlast der Gabel und die abgetastete Fahrzeuggeschwindigkeit an einen Benutzer des Fahrzeuges anzeigt, welches Alarmsystem folgendes umfasst:
- eine Steuerschaltung (80), welche Eingangssignale von dem Fahrzeug-Geschwindigkeitssensor, von dem Sensor für die Höhenlage oder die Höhe der Gabel und von dem Sensor für die Last oder Nutzlast der Gabel erhält;
- einen Speicher (85) mit Daten, welche die Last oder Nutzlast der Gabel und der empfohlenen Gabelhöhen korreliert oder in Beziehung setzt;
- eine Abbildung (28) eines Gabelstaplers auf einer Anzeige (10);
- eine Mehrzahl von Anzeigen (C1 bis C4) für die Höhenlage oder die Höhenzone auf der Darstellungseinrichtung und ansprechend auf die Steuerschaltung zum Anzeigen der Last oder Nutzlast auf der Gabel, wobei die Mehrzahl der Anzeigegeräte für die Höhenlage oder die Höhenzone über der Abbildung eines Gabelstaplers in einer vertikalen Spalte angeordnet sind und wahlweise, gemäß der abgetasteten Last oder Nutzlast auf der Gabel, beleuchtet werden;
- eine Mehrzahl von Sensoren (30,H1 bis H4) für die Höhenlage oder die Höhe der Gabel auf der Anzeige und ansprechend auf die Steuerschaltung zum Anzeigen der abgetasteten Gabelhöhe, der Mehrzahl von Sensoren für die Höhenlage oder die Höhe der Gabel, beinhaltend einen Sensor (30) für die Höhenlage oder die Höhe der Gabel, der relativ zu der Abbildung eines Staplers so angeordnet eine abgesenkte Position der Gabel darstellt, und einem Rest (H1 bis H4) der Mehrzahl der Sensoren für die Höhenlage oder die Höhe der Gabel, welche in der Anzahl gleich ist mit der Mehrzahl von Anzeigen für die Höhenlage oder die Höhenzone und horizontal gegenüber davon angeordnet ist, wobei die Mehrzahl der Sensoren für die Höhenlage oder die Höhe wahlweise von der Steuerschaltung, gemäß der abgetasteten Gabelhöhe beleuchtet wird, und wobei der Rest der Mehrzahl von Sensoren für die Höhe der Gabel wahlweise durch die Steuerschaltung aufblinkt, wenn oder wann immer die Gabel über eine vorbestimmte Höhe angehoben werden und die Fahrzeug-Geschwindigkeit über eine vorbestimmte Geschwindigkeit hinausgeht; und
- einen vom Benutzer korrigierbarer Fehlerindikator (35), welcher von der Steuerschaltung aktiviert wird zum Bereitstellen eines Ausgangssignals, um den Benutzer zu warnen, wenn oder wann immer die Gabel über eine empfohlene Höhe für eine gegebene Last oder Nutzlast angehoben wird.

18. Gabelstapler (100) nach Anspruch 17, wobei zumindest einer der Anzeigen (C1 bis C4,H1 bis H4,35) eine Lampe aufweist.

19. Gabelstapler (100) nach Anspruch 17, wobei der vom Benutzer korrigierbare Fehlerindikator (35) ein Symbol ist, welches beleuchtet wird, um anzuzeigen, wenn die (zumindest eine) Gabel über eine empfohlene Höhe für eine gegebene Last oder Nutzlast angehoben wird.

20. Gabelstapler (100) nach Anspruch 17, wobei das Alarmystem weiterhin einen Textanzeige-Bildschirm (60) aufweist, um den Benutzer visuell bezüglich der abgetasteten Gabelhöhe, der abgetasteten Gabellast oder Nutzlast und der abgetasteten Fahrzeuggeschwindigkeit zu informieren.

21. Gabelstapler (100) nach Anspruch 17, welcher weiterhin einen hörbaren Alarm (90) aufweist, welcher von der Steuerschaltung (80) ausgelöst wird, wenn oder wann immer die Gabel (150) eine vorbestimmte Höhe und die abgetastete Geschwindigkeit des Gabelstaplers einen vorbestimmten Wert überschreiten.

22. Gabelstapler (100) nach Anspruch 17, wobei nur einer der Mehrzahl der Anzeigen (H1 bis H4) für die Höhenlage oder die Höhe der Gabel zu jeder Zeit der Benutzung des Fahrzeugs aktiviert oder stromführend ist.

23. Verfahren zur Anzeige oder Darstellung einer empfohlenen maximalen Höhe, auf welche zumindest eine Gabel oder Zinken (150) eines Gabelstaplers (100) angehoben werden sollten, unter einer gegebenen Lastbedingung oder Belastungsbedingung, mit folgenden Verfahrensschritten:
- Messen eines Gewichtes (210) einer Last, die von den Zinken oder der Gabel getragen wird;
- Messen einer Höhe (190,191) der Zinken oder Gabel;
- Vergleichen (80) der Höhe der Zinken/Gabel mit dem Gewicht der Last;
- Bereitstellen einer sichtbaren Darstellung oder Kennzeichnung (21,H1 bis H4), wenn oder wann immer die Höhe der Gabel/Zinken eine empfohlene Grenzhöhe überschreitet, vorgegeben von einem gemessenen Lastgewicht;
- Kontrollieren oder Beobachten der Geschwindigkeit des Fahrzeugs (100); und
- Bereitstellen eines sichtbaren (32,H1 bis H4) und hörbaren Signals oder einer Indikation (90), wenn oder wann immer die Geschwindigkeit des Fahrzeugs (100) eine vorbestimmte Geschwindigkeit überschreitet und die Gabel bzw. Zinken (150) über eine vorbestimmte Höhe angehoben sind bzw. werden.

## Revendications

1. Chariot élévateur à fourche (100) comprenant :
un capteur de vitesse du chariot (140) ;
un mât (180) porteur d'une fourche (150) qui peut être déplacée en hauteur entre une position abaissée et des positions relevées requises ;
un capteur de hauteur de la fourche (190, 191) ; et
un système d'avertissement indiquant l'état de ladite hauteur de fourche et la vitesse du chariot à un opérateur dudit chariot, ledit système d'avertissement comprenant :
un circuit de contrôle (80) qui répond aux signaux générés par ledit capteur de vitesse du chariot et ledit capteur de hauteur de la fourche ; et
un voyant (32, H1 - H4) relié à une sortie dudit circuit de contrôle, ledit voyant dont l'éclairage est commandé par ledit circuit de contrôle lorsque ladite fourche est relevée à une hauteur plus élevée qu'une hauteur prédéterminée, et dont le clignotement est commandé par ledit circuit de contrôle lorsque ladite fourche est relevée à une hauteur plus élevée qu'une hauteur prédéterminée et que la vitesse du chariot atteint une vitesse plus élevée qu'une vitesse prédéterminée.

2. Chariot élévateur à fourche (100) selon la revendication 1 dans lequel ledit système d'avertissement comprend en outre une alarme sonore (90) reliée à une sortie dudit circuit de contrôle (80), la mise en route de ladite alarme sonore étant commandée par ledit circuit de contrôle chaque fois que ladite fourche (150) est relevée à une hauteur plus élevée que ladite hauteur prédéterminée et que la vitesse du chariot atteint une vitesse plus élevée que ladite vitesse prédéterminée.

3. Chariot élévateur à fourche (100) selon la revendication 1 dans lequel ledit système d'avertissement comprend en outre une représentation (28) d'un chariot élévateur à fourche, et dans lequel ledit voyant (32, H1 - H4) se présente sous la forme d'une fourche placée au-dessus de ladite représentation d'un chariot.

4. Chariot élévateur à fourche (100) selon la revendication 1 dans lequel ledit capteur de hauteur de la fourche (191) établit, après détection, si ladite fourche se situe au niveau ou en dessus d'une hauteur d'affaissement (34) ou en dessous d'une hauteur d'affaissement (34).

5. Chariot élévateur à fourche (100) selon la revendication 1 dans lequel ledit voyant (32, H1 - H4) comprend une ampoule.

6. Chariot élévateur à fourche (100) comprenant :
un mât (180) porteur d'une fourche (150) qui peut être déplacée en hauteur entre une position abaissée et des positions relevées requises ;
un capteur de hauteur de la fourche (190, 191) ;
un capteur de poids de charge du chariot (210) ; et
un système d'avertissement indiquant la hauteur détectée de la fourche et le poids de charge détecté de la fourche à un opérateur dudit chariot, ledit système d'avertissement comprenant :
un dispositif de stockage (85) contenant des données de corrélation des hauteurs de fourche et des poids de charge de la fourche recommandés ;
un circuit de contrôle (80) qui répond aux dites données en provenance dudit dispositif d'enregistrement et aux dits signaux générés par ledit capteur de hauteur de la fourche et ledit capteur de poids de charge de la fourche ;
une pluralité d'indicateurs de hauteur de zone (C1 - C4) reliés au dit circuit de contrôle, l'éclairage desdits indicateurs de hauteur de zone étant commandé de façon sélective par ledit circuit de contrôle en fonction du poids d'une charge détecté sur ladite fourche ;
une pluralité d'indicateurs de hauteur de fourche (H1 - H4) reliés au dit circuit de contrôle, l'éclairage desdits indicateurs de hauteur de fourche étant commandé de façon sélective par ledit circuit de contrôle en fonction de la hauteur détectée de ladite fourche ; et
un indicateur d'erreur susceptible d'être corrigée par l'opérateur (35) relié au dit circuit de contrôle et destiné à avertir un opérateur dudit chariot chaque fois que ladite fourche est relevée à une hauteur plus élevée qu'une hauteur maximale recommandée pour un poids de charge donné.

7. Chariot élévateur à fourche (100) selon la revendication 6 dans lequel au moins un desdits indicateurs/voyants (C1 - C4, H1 - H4, 35) comprend une ampoule.

8. Chariot élévateur à fourche (100) selon la revendication 6 dans lequel ledit indicateur d'erreur susceptible d'être corrigée par l'opérateur (35) est activé lorsqu'un poids de charge donné dépasse un poids de charge maximum pour ledit chariot élévateur à fourche.

9. Chariot élévateur à fourche (100) selon la revendication 6 comprenant en outre un capteur de vitesse du chariot (140) relié au dit circuit de contrôle (80), ledit circuit de contrôle commandant le clignotement desdits indicateurs de hauteur de fourche (H1 - H4) qui s'allument de façon sélective lorsque la vitesse du chariot dépasse une valeur prédéterminée et que la hauteur de fourche est détectée comme se situant en dessus d'une hauteur d'affaissement (34) pour ledit chariot élévateur à fourche.

10. Chariot élévateur à fourche (100) selon la revendication 9 dans lequel ledit système d'avertissement comprend en outre une alarme sonore (90) reliée au dit circuit de contrôle (80), ledit circuit de contrôle commandant le retentissement de ladite alarme sonore lorsque la vitesse du chariot dépasse ladite valeur prédéterminée et que la hauteur de la fourche est détectée comme se situant en dessus d'une hauteur d'affaissement pour ledit chariot élévateur à fourche.

11. Chariot élévateur à fourche (100) selon la revendication 10 dans lequel ledit système d'avertissement comprend en outre un écran d'affichage de texte (60) adapté pour informer visuellement ledit opérateur sur la hauteur détectée de la fourche, le poids de charge détecté de la fourche et la vitesse détectée du chariot.

12. Chariot élévateur à fourche (100) selon la revendication 6 comprenant en outre un vérin de basculement hydraulique (200) adapté pour faire basculer ladite fourche (150) sur toute l'étendue d'une plage de basculement de fourche (195), ledit capteur de poids (210) étant relié au dit vérin de basculement afin de contrôler la pression du fluide hydraulique contenu dans ledit vérin de basculement dont la pression dépend du poids qui est supporté par ladite fourche.

13. Chariot élévateur à fourche (100) selon la revendication 12 comprenant en outre un dispositif de contrôle du basculement de la fourche (250), ledit dispositif de contrôle du basculement de la fourche étant actionné lorsque ladite fourche (150) est basculée à des valeurs extrêmes de ladite plage de basculement de fourche (195) et étant relié au dit circuit de contrôle (80) afin de provoquer l'arrêt dudit système d'avertissement lorsqu'il est actionné.

14. Chariot élévateur à fourche (100) selon la revendication 13 dans lequel ledit dispositif de contrôle du basculement de la fourche (250) comprend un interrupteur.

15. Chariot élévateur à fourche (100) selon la revendication 12 dans lequel ledit système d'avertissement comprend en outre un écran d'affichage de texte (60) relié au dit circuit de contrôle (80) pour informer visuellement ledit opérateur sur la hauteur détectée de la fourche, le poids de charge détecté de la fourche et la vitesse détectée du chariot.

16. Chariot élévateur à fourche (100) selon la revendication 15 comprenant en outre un dispositif de contrôle du basculement de la fourche (250), ledit dispositif de contrôle du basculement de la fourche étant activé lorsque ladite fourche (150) est basculée à des valeurs extrêmes de ladite plage de basculement de fourche (195) et étant relié au dit circuit de contrôle (80) afin de provoquer l'arrêt dudit système d'avertissement lorsqu'il est activé, ledit circuit de contrôle affichant un message de désactivation du moniteur sur ledit écran d'affichage de texte (60) lorsque ledit dispositif de contrôle du basculement de la fourche est actionné.

17. Chariot élévateur à fourche (100) comprenant :
un mât (180) porteur d'une fourche (150) qui peut être déplacée en hauteur entre une position abaissée et des positions relevées requises ;
un capteur de vitesse du chariot (140) ;
un capteur de hauteur de la fourche (190, 191) ;
un capteur de poids de charge du chariot (210) ; et
un système d'avertissement indiquant la hauteur détectée de la fourche, le poids de charge détecté de la fourche et la vitesse détectée du chariot à un opérateur dudit chariot, ledit système d'avertissement comprenant :
un circuit de contrôle (80) qui reçoit des signaux d'entrée en provenance dudit capteur de vitesse du chariot, dudit capteur de hauteur de la fourche et dudit capteur de poids de charge ;
un dispositif de stockage (85) contenant des données de corrélation des hauteurs de fourche recommandés et des poids de charge de la fourche ;
une représentation (28) d'un chariot élévateur à fourche sur un tableau de bord (10) ;
une pluralité d'indicateurs de hauteur de zone (C1 - C4) situés sur ledit tableau de bord et qui répondent au dit circuit de contrôle en représentant le poids de charge qui pèse sur ladite fourche, ladite pluralité d'indicateurs de zone de hauteur se trouvant placée au-dessus de ladite représentation d'un chariot élévateur à fourche en colonne verticale et s'éclairant de façon sélective en fonction du poids de charge détecté sur ladite fourche ;
une pluralité d'indicateurs de hauteur de fourche (30, H1 - H4) situés sur ledit tableau de bord et qui répondent au dit circuit de contrôle en représentant la hauteur détectée de ladite fourche, ladite pluralité d'indicateurs de hauteur de fourche comprenant un indicateur de hauteur de fourche (30) placé juste à côté de ladite représentation d'un chariot élévateur dans une position représentant une position abaissée de ladite fourche et le reste des indicateurs (H1 - H4) de ladite pluralité d'indicateurs de hauteur de fourche étant égaux en nombre à ladite pluralité d'indicateurs de zone de hauteur et étant placés horizontalement à l'opposé de ceux-ci, l'éclairage de ladite pluralité d'indicateurs de hauteur de fourche étant commandé de façon sélective par ledit circuit de contrôle en fonction de la hauteur de fourche détectée, et le clignotement desdits autres indicateurs de ladite pluralité d'indicateurs de hauteur de fourche étant commandé de façon sélective par ledit circuit de contrôle chaque fois que ladite fourche est relevée à une hauteur plus élevée qu'une hauteur prédéterminée et que la vitesse dudit chariot est plus élevée qu'une vitesse prédéterminée ; et
un indicateur d'erreur susceptible d'être corrigée par l'opérateur (35) activé par ledit circuit de contrôle et destiné à émettre un signal de sortie afin d'avertir un opérateur chaque fois que ladite fourche est relevée à une hauteur plus élevée qu'une hauteur recommandée pour un poids de charge donné.

18. Chariot élévateur à fourche (100) selon la revendication 17 dans lequel au moins un desdits indicateurs/voyants (C1 - C4, H1 - H4, 35) comprend une ampoule.

19. Chariot élévateur à fourche (100) selon la revendication 17 dans lequel ledit indicateur d'erreur susceptible d'être corrigée par l'opérateur (35) est un symbole qui s'allume pour indiquer lorsque ladite fourche est relevée à une hauteur plus élevée qu'une hauteur recommandée pour un poids de charge donné.

20. Chariot élévateur à fourche (100) selon la revendication 17 dans lequel ledit système d'avertissement comprend en outre un écran d'affichage de texte (60) adapté pour informer visuellement ledit opérateur sur la hauteur détectée de la fourche, le poids de charge détecté de la fourche et la vitesse détectée du chariot.

21. Chariot élévateur à fourche (100) selon la revendication 17 comprenant en outre une alarme sonore (90) dont le retentissement est commandé par ledit circuit de contrôle (80) chaque fois que ladite fourche (150) est relevée à une hauteur plus élevée qu'une hauteur recommandée et que la vitesse détectée dudit chariot élévateur à fourche dépasse une valeur prédéterminée.

22. Chariot élévateur à fourche (100) selon la revendication 17 dans lequel seulement un indicateur de ladite pluralité d'indicateurs de hauteur de fourche (H1 - H4) est excité à un moment quelconque durant le fonctionnement dudit chariot.

23. Procédé d'affichage d'une hauteur maximale recommandée à laquelle la fourche (150) d'un chariot élévateur à fourche (100) doit être relevée dans des conditions de charge données, comprenant les étapes consistant à :
mesurer le poids (210) de la charge supportée par ladite fourche ;
mesurer la hauteur (190, 191) de ladite fourche ;
comparer (80) ladite hauteur de ladite fourche par rapport au dit poids de ladite charge ;
fournir une indication visible (21, H1 - H4) chaque fois que la hauteur de ladite fourche dépasse une limite de hauteur recommandée dictée par un poids de charge mesuré ;
surveiller la vitesse dudit chariot (100) ; et
fournir une indication visible (32, H1 - H4) et sonore (90) chaque fois que ladite vitesse dudit chariot (100) dépasse une vitesse prédéterminée et que ladite fourche (150) est relevée à une hauteur plus élevée qu'une hauteur prédéterminée.
